# EUROPÄISCHE PATENTANMELDUNG

(11) **EP 1 234 549 A1**
(43) Veröffentlichungstag der Anmeldung: **28.08.2002**
(21) Anmeldenummer: 01103452.7
(22) Anmeldetag: 14.02.2001
(51) Int. Cl.: A61C 7/30, A61C 7/28

(54) **Linguales Bracket**

(71) Anmelder: Heiser, Wolfgang, Dr. med., 6020 Innsbruck (AT); Schendell-Gröling, Claus, Dipl.-Ing., 82205 Gilching (DE)
(72) Erfinder: Heiser, Wolfgang, Dr. med., 6020 Innsbruck (AT); Schendell-Gröling, Claus, Dipl.-Ing., 82205 Gilching (DE)
(74) Vertreter: Körner, Ekkehard, Dipl.-Ing.

(57) **Zusammenfassung**

Ein linguales Bracket für kieferorthopädische Behandlungen im Front- und Eckzahnbereich weist einen parallel zur Grundplatte des Bracket gerichteten Schlitz auf, der so gerichtet ist, daß die Schlitzöffnung in die Kauebene weist. Vorzugsweise hat der Schlitz eine Tiefe, die geringer ist als seine Breite. Als Organ zum Sichern eines Richtdrahtes in dem Schlitz ist dieser vorzugsweise von einer Schließfeder überdeckt, die in Öffnungs- und Schließstellung am Bracketaufbau stabil gehalten ist. Ein in den Schlitz eingelegter Richtdraht wird von der Schließfeder gegen den Schlitzgrund gedrückt und wirkt außerdem unmittelbar auf wenigstens eine seitliche Schlitzwand und erzeugt am Bracket die für die Stellungskorrektur des Zahns erforderlichen Kräfte. Auf die Verwendung von Sicherungsnasen für die Schließfeder kann verzichtet werden, wodurch die Höhe des Bracket vermindert wird.

## Beschreibung

Die Erfindung bezieht sich auf ein linguales Bracket für kieferorthopädische Behandlungen der oberen und unteren Front- und Eckzähne, bestehend aus einer Grundplatte zur klebenden Befestigung an der lingualen Seite eines Zahns mit einander entgegengesetzten okklusalen und gingivalen Rändern und einander entgegengesetzten mesialen und distalen Rändern, einem sich von der Grundplatte erhebenden Aufbau mit einem sich im wesentlichen parallel zu den okklusalen und gingivalen Rändern erstreckenden Schlitz zur Aufnahme eines Richtdrahtes und ggf. mit einer an dem Aufbau beweglich gelagerten Einrichtung zum wenigstens teilweisen Überdecken der sich parallel zu den genannten Rändern erstreckenden Schlitzöffnung.

Die Zähne des natürlichen menschlichen Gebisses können verschiedene Fehlstellungen aufweisen. Zur Korrektur derselben werden an den Zähnen Brackets angebracht, die durch einen in die je nach Zahn unterschiedlichen Schlitze der Brackets eingelegten elastischen Richtdraht gleichsam wie die Perlen einer Kette miteinander verbunden werden. Je nach Fehlstellung des Zahns erzeugt der Richtdraht aufgrund der Tatsache, daß er an den anderen Zähnen ebenfalls durch Brackets festgehalten ist, über das Bracket an dem betreffenden Zahn Kräfte, die mit "Angulation", "Rotation" und "Torque" bezeichnet werden. Angulationskräfte korrigieren eine seitliche Schiefstellung des Zahns, Rotationskräfte drehen den Zahn quasi um seine Achse und Torque-Kräfte schwenken den Zahn quer zur Zahnreihe, d.h. um eine Achse, die quer zur Zahnachse und im wesentlichen parallel zur Zahnreihe verläuft, um beispielsweise eine Progenie, einen Kreuzbiß oder einen Vorbiss zu korrigieren. Es kommt dabei zu einer dreidimensionalen Korrektur der Stellung eines jeden einzelnen Zahnes. Auf die verschiedenen Korrektur-Richtungen wird später noch eingegangen.

Bei der Behandlung von Zahnfehlstellungen mit Hilfe von Brackets wird anfänglich ein relativ dünner Richtdraht verwendet, weil zunächst geringe Korrekturkräfte an den Zähnen ausreichen und zu große Korrekturkräfte Schmerzen hervorrufen würden. Mit zunehmender Annäherung der Zähne an die Sollstellung aufgrund fortschreitenden Behandlungserfolgs müssen immer dickere Drähte verwendet werden, um die notwendigen Korrekturkräfte an den Zähnen aufzubringen. Der Richtdraht wird im Zuge der Behandlung bis zu zehnmal ausgetauscht.

Die Querschnittsabmessungen von Richtdrähten quadratischen oder rechteckigen Querschnitts reichen von 16 x 16 bis 22 x 28 mil (1 mil = 10⁻³ Zoll). Dementsprechend haben die Bracketschlitze Abmessungen, die für die Aufnahme des Richtdrahtes größten Querschnitts ausreicht, der für die Behandlung vorgesehen ist.

Ein Bracket der eingangs genannten Art ist aus der US 5 863 199 bekannt. Diese Druckschrift beschreibt ein linguales kieferorthopädisches Bracket, bei dem die Einrichtung zum Überdecken oder Verschließen des Schlitzes, der für die Aufnahme des Richtdrahtes bestimmt ist, ein an dem Aufbau um einen Lagerstift gelenkig gelagerter Hebel ist, der in seiner Schließstellung durch Ligaturen festgehalten werden muß, die um diesen Hebel und um eine an dem Aufbau ausgebildete Nase geschlungen werden. Der Schlitz ist an dem Bracket derart ausgebildet, daß seine Öffnung in Richtung der Gingiva weist. Das bedeutet, daß der Kieferorthopäde den Richtdraht von der ihm abgewandten Hinterseite des Bracket her in den Schlitz einlegen muß. Das ist nur indirekt mit Hilfe eines Spiegels kontrollierbar. Außerdem ist der Richtdraht beim Beißen in eine Speise dem Druck der betreffenden Speise in einer Richtung ausgesetzt, die aus dem Schlitz herausführt, so daß der Richtdraht aus dem Schlitz hinausgedrückt würde, wenn sich der genannte Hebel öffnete. Die Ligaturen müssen daher sehr zuverlässig sein, um ein Öffnen der über dem Schlitz befindlichen Verschließeinrichtung zu verhindern.

Aus der US 5 857 849 ist ein Bracket bekannt, das sowohl labial als auch lingual eingesetzt werden kann. Es hat einen sehr flachen Aufbau, in dem der Schlitz zur Aufnahme eines Richtdrahtes im wesentlichen senkrecht von der Grundplatte weg weist. Der Schlitz ist von einer Schließplatte überdeckt, die von einer Feder in einer Schließstellung gehalten wird. Nachteilig an dieser Konstruktion ist, daß der von dem Richtdraht aufgebrachte Druck, der bei lingualer Anwendung des Bracket häufig nach innen, d. h. in Richtung der Mundhöhle gerichtet ist, von der Schließplatte und deren sie in der Schließstellung haltenden Feder aufgenommen werden muß. Die Abstützung des Richtdrahtes ist daher nicht starr, sondern in gewisser Weise elastisch, was die für die Rotation eines Zahns erforderlichen Kräfte nicht ausreichend entwickelt.

Aus der US 6 142 776 ist ein linguales kieferorthopädisches Bracket bekannt, dessen Schlitz ähnlich gerichtet ist wie der bei dem Bracket nach der US 5 863 199. Für die Sicherung des Richtdrahtes sind bei diesem Bracket ausschließlich Ligaturen in Form von hoch elastischen O-Ringen (in der Regel aus Gummi) vorgesehen, so daß dieses Bracket sowohl im Gebrauch als auch beim Wechsel des Richtdrahtes ähnliche Nachteile aufweist, wie das zuvor genannte. Hinzu kommt, daß in die Mundhöhle hinein gerichtete Kräfte, die von dem Richtdraht ausgehen, von den Ligaturen aufgenommen werden müssen, die diesen Kräften leicht nachgeben.

Weitere linguale Brackets sind aus US 4 455 137 bekannt. Bei ihnen ist der Schlitz auf der der Grundplatte abgewandten Seite des Aufbaus offen, und der Richtdraht ist mit Ligaturen in dem Schlitz zu sichern, so daß dieses Bracket jene Nachteile aufweist, die den beiden zuletzt erläuterten Brackets aus US 5 857 849 und 6 142 776 eigen sind. Gleiches gilt für Brackets, die aus US 4 337 037 und 4 669 981 bekannt geworden sind.

Die US 5 516 284 beschreibt ein linguales kieferorthopädisches Bracket, dessen Schlitz von einer am Aufbau schwenkbar gelagerten Schließanordnung überdeckt werden kann, die aus einem Blechstreifen besteht, der eine U-förmig gebogenen Abschnitt hat, der an dem Aufbau gelagert ist und dessen beide Schenkel ungleich lang und nochmals C-förmig gebogen sind. In der Schließstellung überdeckt der kürzere dieser C-förmigen Schenkel den Schlitz, während der andere C-förmige Schenkel mittels einer Ligatur an einem an dem Aufbau ausgebildeten Horn gesichert werden muß. Der Gesamtaufbau dieses Brackets ist relativ hoch, und die Öffnung des Schlitzes liegt, vergleichbar dem Bracket nach der eingangsgenannten US 5 863 199, auf der dem Operateur abgewandten Seite.

In der Kieferorthopädie ist man seit langem zu sogenanntem selbstligierenden Brackets übergegangen, bei denen der Richtdraht im Schlitz des Bracket durch ein federndes, verschwenkbares Element oder einen federnd gesicherten Schieber gesichert ist, vergleiche beispielsweise US 6 071 118 oder EP 0 938 874 A2. Solche Brackets für labiale Anwendung haben sich bislang gut bewährt. Für linguale Anwendung sind indessen bislang noch keine befriedigenden Lösungen vorgeschlagen worden. Grund dafür ist vor allem, daß der Platz, der für die Anbringung der Brackets zur Verfügung steht, sehr gering ist, und daher der Abstand der Brakkets voneinander, der erforderlich ist, damit der Richtdraht noch eine Wirkung entfalten kann, sehr klein ist. Die Brackets müssen daher erheblich schmaler als die für labiale Anwendung sein. An schmalen Brackets ist aber der für den Richtdraht zur Verfügung stehende Hebelarm zur Ausübung von Richtkräften, insbesondere für Rotation und Torque, sehr klein.

Der Erfindung liegt die Aufgabe zugrunde, ein Bracket der eingangs genannten Art anzugeben, in das sich der Richtdraht einfach und zeitsparend einlegen läßt, in dem der Richtdraht sicher gehalten ist und an dem der Richtdraht seine Wirkung auf bestmögliche Weise ausüben kann.

Diese Aufgabe wird durch die im Anspruch 1 angegebenen Merkmale gelöst. Vorteilhafte Ausgestaltungen der Erfindung sind Gegenstand der Unteransprüche.

Die Erfindung schafft ein Bracket, bei dem der Schlitz so gerichtet ist, daß sich der Richtdraht in ihn von der okklusalen Seite (Kauebene) her einlegen läßt. Das Einlegen des Richtdrahtes läßt sich daher sehr gut ohne Zuhilfenahme eines Spiegels kontrollieren. Das Sichern des Richtdrahtes im Schlitz erfolgt durch eine Ligatur oder durch eine Feder, insbesondere durch eine solche, die zwischen zwei Stellungen in an sich bekannter Weise verschwenkt werden kann, wobei sie in der einen Stellung den Schlitz freigibt und in der anderen Stellung den Schlitz überdeckt. Beispielhaft hierfür sei auf die US 5 562 444 hingewiesen.

Aufgrund der erfindungsgemäßen Ausrichtung des Schlitzes wird die von dem Richtdraht auf das Bracket und somit den behandelten Zahn ausgeübte Rotations-Wirkung nicht durch irgendwelche elastischen Schließ- oder Haltemechanismen, wie Federn oder Ligaturen, sondern vom Bracketaufbau unbeeinflußt aufgenommen und auf den Zahn übertragen. Bei Brackets für die Anwendung im Front- und Eckzahnbereich wirken die Richtkräfte nämlich in einer Ebene, die nicht senkrecht zur Grundfläche des Bracket verläuft, sondern im wesentlichen parallel zur Kauebene. In dieser Richtung aber ist der Richtdraht nicht vom Schließmechanismus des Bracket, d.h. der Ligatur oder der Feder, sondern von wenigstens einer Seitenwand des den Richtdraht aufnehmenden Schlitzes abgestützt. Vom Richtdraht ausgehenden Kräfte werden daher besser als bei bekannten lingualen Brackets auf den Zahn übertragen, so daß auch bei den im Vergleich zu labial zu verwendenden Brackets schmalen lingualen Brackets ausreichend große Richtkräfte, insbesondere für Rotation und Torque, entwickelt werden können. Außerdem verstärkend wirken Kräfte, die beim Kauen wie etwa beim Abbeißen von einem Apfel, auf den Richtdraht wirken, in einer Richtung, in der der Richtdraht auf den Schlitzgrund gedrückt wird.

Es versteht sich, daß entsprechend der unterschiedlichen Neigungen der lingualen Zahnflächen, auf denen die Brackets anzubringen sind, die Neigungen der Schlitzebenen gegenüber der von der Grundplatte bestimmten Fläche unterschiedlich sein müssen, um das von der Erfindung angestrebte Ziel an allen zentralen und lateralen Zähnen zu erreichen. Mit Schlitzebene ist hier eine Ebene gemeint, die sich im wesentlichen senkrecht zum Schlitzgrund erstreckt. Demnach wird für eine kieferorthopädische Behandlung ein Satz Brackets benötigt, der unterschiedliche, für die verschiedenen Zähne im Front- und Eckzahnbereich bestimmte Brackets aufweist. Brackets für die Molaren sind hingegen anders gestaltet und nicht Gegenstand dieser Erfindung.

Das erfindungsgemäße Bracket unterscheidet sich von allen bekannten lingualen Brackets dadurch, daß der Schlitz zur Kauebene hin offen ist und vorzugsweise weniger tief ist als breit. Ein Richtdraht rechteckigen Querschnitts wird daher mit seiner breiten Seite in den Schlitz quasi flach eingelegt, während bei allen bekannten lingualen Brackets der Richtdraht mit seiner schmalen Seite, also quasi hochkant in Bezug auf den Schlitz, in den Schlitz eingelegt wird.

Beim erfindungsgemäßen Bracket drückt die Ligatur oder die Schließfeder die breite Seite des Richtdrahtes auf den Schlitzgrund in einer Richtung, die je nach Fehlstellung des Zahns mehr oder weniger senkrecht zur Kauebene verläuft. Dadurch werden bei angularer Fehlstellung von der Ligatur oder der Schließfeder Kräfte erzeugt, die im Sinne einer Korrektur dieser Fehlstellung wirken. Bei den bisher bekannten lingualen Brackets können die Schließmechanismen solche elastischen Kräfte nicht aufbringen. Bei dem erfindungsgemäßen Bracket hingegen steht der Richtdraht von Anfang an unter der Wirkung der Kraft von der Ligatur oder der Feder und ist daher entsprechend am Zahn wirksam.

Weiterhin liegt der Richtdraht bei einem rotierten Zahn an zwei diagonal gegenüberliegenden Kanten an den Enden des Schlitzes an und übt dort Druck aus, so daß die Elastizität des Drahtes am Bracket Rotationskräfte hervorruft, die unmittelbar auf das Bracket wirken und somit auf den Zahn übertragen werden. Das ist besonders wichtig bei den Brackets für die Frontzähne des Unterkiefers, da wegen der geringen Abmessungen der Zähne die dort zur Anwendung gelangenden Brakkets sehr schmal sind und damit die Hebelwirkung sehr gering ist. Elastische Abstützungen, etwa durch O-Ringe, wie im Stand der Technik, würden die Wirkung des Richtdrahtes in diesem Bereich erheblich vermindern und oftmals nur ungenügende Kräfte zur Korrektur einer Rotation entwickeln. Diesen Nachteil vermeidet die Erfindung.

Ein Besonderer Vorteil der Erfindung, der aus der durch die Erfindung geschaffenen Lage der Schlitzöffnung resultiert, ist ferner, daß auf Sicherungsnasen für das freie Ende der Schließfeder, wo eine solche anstelle einer Ligatur verwendet wird, verzichtet werden kann und bei den Brackets für die oberen Frontzähne und ggf. auch für die oberen Eckzähne vorteilhafterweise auch tatsächlich verzichtet wird. Diese Brackets sind somit extrem flach, was wichtig ist, um zu verhindern, daß beim Schließen der Kiefer die hinter die oberen Frontzähne greifenden unteren Frontzähne auf die an den oberen Frontzähnen befestigten Brackets auftreffen.

Eine solche Sicherungsnase ist beispielsweise aus US 4 492 573 bekannt und bei dem dort dargestellten Bracket unverzichtbar, denn die Öffnungs- und Schließbewegung der dort U-förmig gestalteten Feder, deren einer Schenkel den Schlitz überdeckt, verläuft quer zu jener Richtung, in der der Richtdraht den Schlitz verlassen würde. Wenn der Richtdraht, aus welchen Gründen auch immer, in Federschließstellung aus dem Schlitz gedrängt würde, dann würde er die Feder über deren Elastizitätsgrenze hinaus verbiegen und damit das gesamte Bracket zerstören, wenn das freie Ende des den Schlitz überdeckenden Federschenkels nicht unter einer vorstehenden Nase gesichert wäre. Beim erfindungsgemäßen Bracket hingegen wirkt ein aus dem Schlitz herausdrängender Richtdraht in Öffnungsrichtung der Schließfeder auf diese ein und verschwenkt diese lediglich, ohne sie zu zerstören. Die Sicherungsnase ist daher bei diesem Bracket grundsätzlich entbehrlich. Wo man sie dennoch, beispielsweise im Eckzahnbereich, einsetzt, dient sie dort einerseits der Vergrößerung des Widerstandes gegen ein Herausdrücken des Richtdrahtes aus dem Schlitz, andererseits wird bei Überschreiten einer bestimmten Kraft der Draht freigegeben und somit der Zahn automatisch vor Überlastung geschützt. Mit dieser Nase kann somit der gewünschte Öffnungswiderstand der Feder erzeugt werden.

Die Erfindung wird nachfolgend unter Bezugnahme auf die Zeichnungen näher erläutert. Es zeigt:
- Fig. 1: eine Seitenansicht eines erfindungsgemäßen Bracket im geschlossenen Zustand des Schlitzes;
- Fig. 2: das Bracket von Fig. 1 in geöffnetem Zustand des Schlitzes;
- Fig.3a: verschiedene Brackets im montierten Zustand an Frontzähnen, Eckzähnen und Molaren eines Oberkiefers;
- Fig. 3b: die Brackets aus Fig. 3a etwas vergrößert und in gleicher Ausrichtung wie in Fig. 3a dargestellt, und
- Fig. 4: eine Draufsicht auf ein Bracket nach Fig. 1 mit teilweise weggebrochen dargestellter Schließfeder und eingelegtem Richtdraht;
- Fig. 5: einen Zahn mit schräger Fehlstellung (Angulation) mit darauf angebrachtem Bracket von Fig. 1 in Blickrichtung H von Fig. 3a, Zahn 12, zur Erläuterung der Angulationswirkung der Schließfeder;
- Fig. 6: eine Seitenansicht des Bracket von Fig. 1 mit eingelegtem Richtdraht;
- Fig. 7: ein Bracket ähnlich Fig. 1 mit Vorsprung über dem freien Federende, und
- Fig. 8 und 9: Seitenansichten zweier erfindungsgemäßer Brackets für die Verwendung ausschließlich mit elastischen Ligaturen.

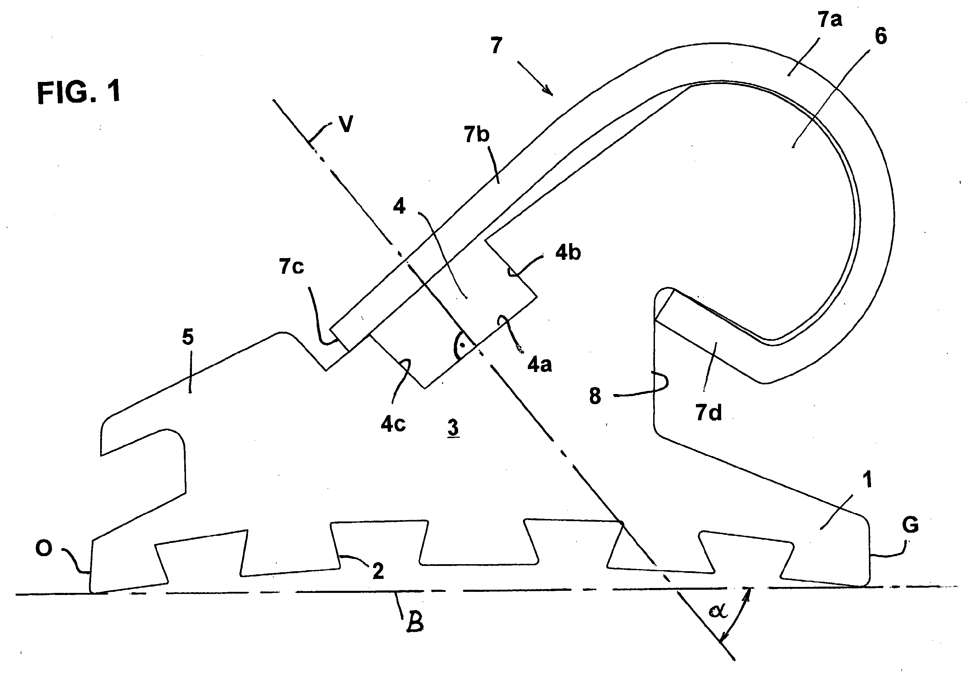

Das Bracket nach Fig. 1 besteht aus einer Grundplatte 1 mit im Querschnitt schwalbenschwanzförmigen Nuten 2 an ihrer Unterseite und einem Aufbau 3, in dem ein Schlitz 4 rechteckigen Querschnitts ausgebildet ist. Die Tiefe dieses Schlitzes 4 ist im dargestellten Beispiel vorteilhafterweise geringer als seine Breite. Der Aufbau 3 hat zwei Flügel 5 und 6, die an die Seitenwände des Schlitzes 4 angrenzen und zum Anbringen von Ligaturen verwendet werden können. Zum Brakket gehört fernerhin eine insgesamt mit 7 bezeichnete Feder, hier eine Blattfeder, die einen bogenförmigen Abschnitt 7a hat, der sich über einen Bogen von etwa 270° erstreckt und in einen in etwa geradlinigen Abschnitt 7b übergeht, dessen Endbereich den Schlitz 4 im Schließzustand der Feder 7 überdeckt, wie in Fig. 1 dargestellt. Der bogenförmige Abschnitt 7a der Feder umschlingt den Flügel 6 des Aufbaus 3. Die Feder hält sich selbst durch eigene Vorspannung an dem Aufbau 3 in einem den Schlitz 4 überdeckenden Zustand fest. Die Feder 7 kann auch eine Drahtbügelfeder sein, wie in DE 44 07 100 C2 beschrieben.

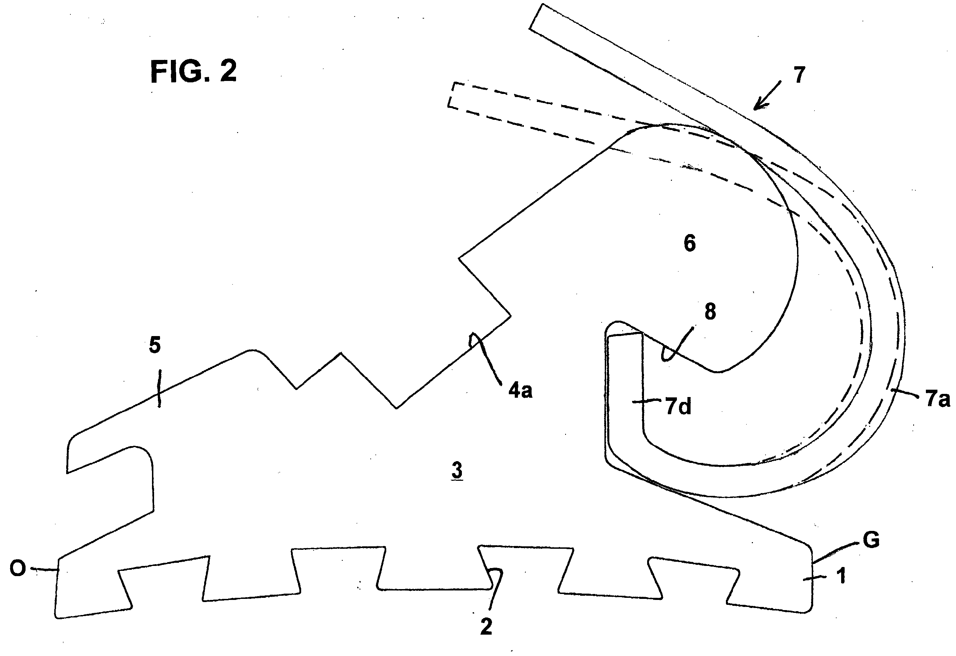

Wie Fig. 2 zeigt, kann die Feder 7 aus dem in Fig. 1 dargestellten Zustand in einen den Schlitz 4 freigebenden Zustand um den Flügel 6 verschwenkt werden. Zu diesem Zweck ist unterhalb des Flügels 6 an dem Aufbau 3 eine Kehle 8 ausgebildet, innerhalb der der sich an den bogenförmigen Abschnitt 7a anschließende Endbereich 7d der Feder 7 schwenkend bewegen kann. Fig. 2 zeigt in gestrichelten Linien, wie sich die Feder verhalten würde, wenn sie sich weitgehend entspannen könnte. Man erkennt an den durchgezogenen Linien, daß die Feder in dem in Fig. 2 gezeigten Öffnungszustand leicht aufgebogen ist. In diesem Zustand sichert sie sich klemmend selbst an dem Flügel 6 des Bracket.

Die Nuten 2 dienen der Aufnahme von Klebstoff bzw. Zement, mit dem das Bracket am Zahn befestigt wird, wobei die schwalbenschwanzförmige Gestalt der Nutquerschnitte die Haftung des Klebstoffs bzw. Zements verbessert.

Mit Ausnahme der Dimensionierung des Schlitzes 4 und der flachen Gesamtgestaltung der Oberseite des Bracket ist das dargestellte Bracket konventionell.

Die besonderen Eigenschaften des Bracket die für die von der Erfindung angestrebten Wirkungen maßgebend sind, werden durch die Tatsache bestimmt, daß der Schlitz 4 eine solche Ausrichtung hat, daß eine auf dem Schlitzgrund 4a senkrecht stehende, gedachte Ebene, die parallel zur Längserstreckung des Schlitzes 4 verläuft und in Fig. 1 mit V bezeichnet ist, mit einer von der Grundfläche der Grundplatte 1 bestimmten Ebene B einen spitzen Winkel α bildet, dessen Scheitel in Richtung auf den gingivalen Rand G der Grundplatte 1 weist, so daß die dem Schlitzgrund 4a gegenüberliegenden Öffnung des Schlitzes 4 im wesentlichen in Richtung des okklusalen Randes O der Grundplatte 1 des Bracket weist. Die Bedeutung dieser Maßnahme wird aus Fig. 3a verständlich, in der eine Zahnreihe aus Einser- und Zweier-Frontzähnen 11 und 12, Eckzahn 13 und zwei Backenzähnen 14 und 15 mit daran angebrachten Brackets schematisch dargestellt ist.

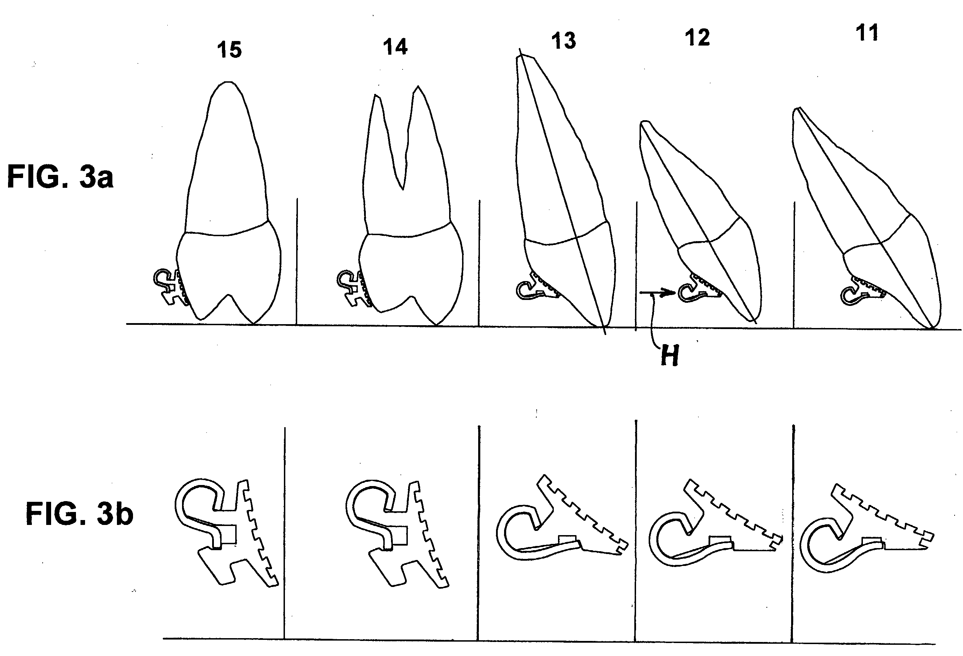

Man erkennt in Fig. 3a, daß die von den Federenden jeweils überdeckten Öffnungen der Schlitze der Brackets an den Frontzähnen 11 und 12 und dem Eckzahn 13 in die gleiche Richtung weisen, nämlich in die Richtung der Kauebene, im Gegensatz zu den Schlitzebenen der an den Backenzähnen 14 und 15 angebrachten Brackets, die im wesentlichen parallel zur Kauebene verlaufen, wie es Stand der Technik ist. Weiterhin sieht man, daß die Grundflächen aller Bracketgrundplatten, d.h. die Ebenen B, entsprechend der unterschiedlichen Neigungen der lingualen Flächen der Zahnkronen gegenüber der Kauebene unterschiedliche Neigungen in Bezug auf die Kauebene oder eine dazu senkrechte Ebene haben. Für die unterschiedlichen Zähne sind somit unterschiedliche Brackets erforderlich. In Fig. 3b ist dieses nochmals in etwas größerem Maßstab herausgezeichnet.

Die Winkel, die die Grundflächen der Bracketgrundplatten mit einer Senkrechten auf die Okklusalebene einschließen, betragen beispielsweise beim Bracket für die oberen Frontzähne ca. 45°, für die unteren Frontzähne ca. 30° und für alle vier Eckzähne ca. 35°. Dadurch ist auch die Neigung der genannten Ebene V jedes Bracket gegen die Grundplattenebene B bestimmt.

Man erkennt aus Fig. 3a, daß das Einlegen eines Richtdrahtes in die Bracketschlitze an den Front- und Eckzähnen sehr einfach von der Kauebene her beobachtet werden kann. Angewendet beispielsweise am Unterkiefer läßt sich somit der Richtdraht in die Bracketschlitze im Front- und Eckzahnbereich bequem von oben einlegen und beobachten, und anschließend lassen sich die Schließfedern zuverlässig über dem in den Schlitzen liegenden Richtdraht schließen.

Man erkennt ferner, daß ein in die Bracket eingelegter Richtdraht beim Beißen nicht durch den Druck des gebissenen Lebensmittels aus dem Schlitz gedrückt werden kann.

Weiterhin sieht man, daß die vom Richtdraht am Zahn hervorgerufenen Kräfte für eine Rotation des Zahns nicht an der Schließfeder wirken, sonder an den seitlichen Begrenzungswänden der Bracketschlitze. Der Richtdraht stützt sich also nicht an einer elastisch nachgebenden Fläche, sondern an einer starren Fläche ab und bringt daher eine entsprechend bessere Wirkung hervor.

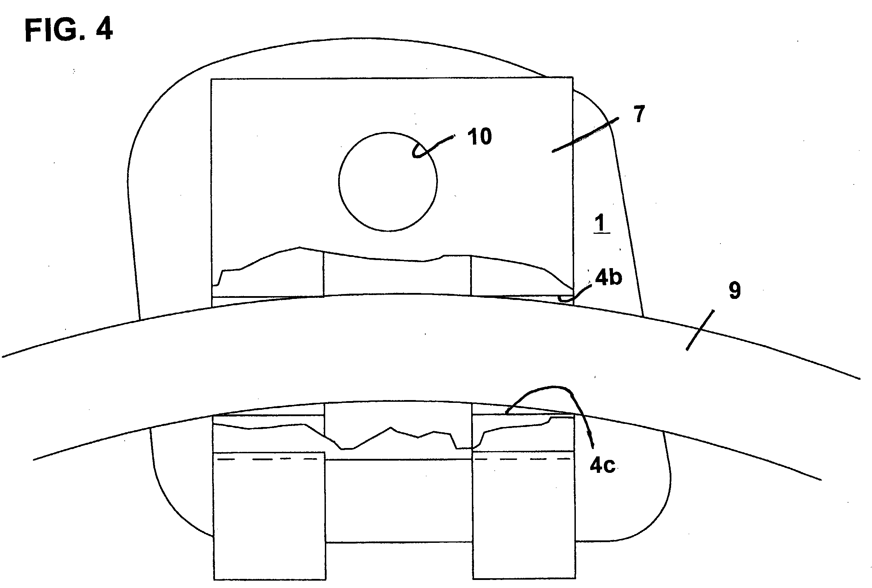

Letzteres wird besonders aus Fig. 4 deutlich, die ein erfindungsgemäßes Bracket mit in seinen Schlitz 4 eingelegten Richtdraht 9 zeigt, wobei die Schließfeder zur besseren Erläuterung der Erfindung teilweise weggebrochen ist. Man schaut in Fig. 4 von der Kauebene her auf das Backet, also auf den Bogen, in dem der Richtdraht 9 an den Zähnen der Zahnreihe entlangläuft. Man erkennt in Fig. 3 deutlich, daß der Richtdraht 9 an den den Schlitz 4 begrenzenden Seitenwänden 4b und 4c anliegt und von diesen starr abgestützt wird, so daß er sowohl seine Rotationskräfte zum Drehen des Zahns um seine Achse als auch sein Torque-Kräfte zum Verschwenken des Zahns quer zu seiner Achse unmittelbar auf das Bracket übertragen kann.

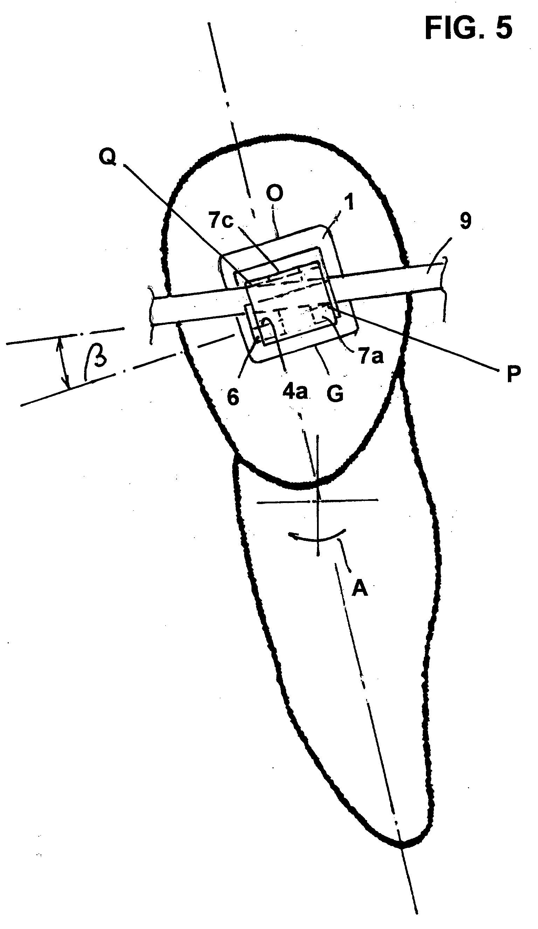

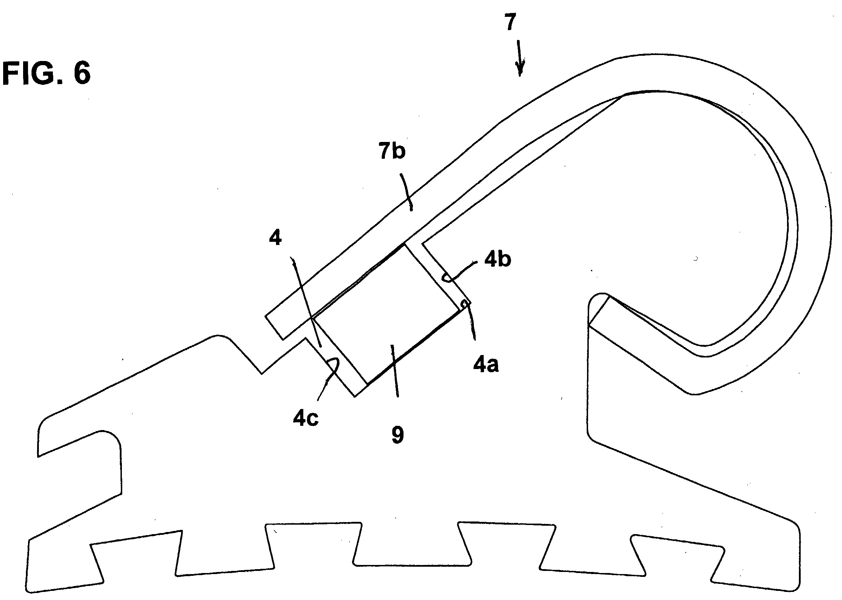

Aus den Fig. 5 und 6 kann man die Wirkung der Schließfeder 7 im Sinne einer Korrektur der Angulation eines Zahns entnehmen. Fig. 5 zeigt ein Bracket, das an einem Zahn befestigt ist, der eine Angulationsfehlstellung hat und quer zu seiner in Fig. 5 strichpunktiert eingezeichneten in Richtung des Pfeiles A korrigiert werden muß. Fig. 5 zeigt die Ansicht von der Rückseite des Zahns 12 in Fig. 3, also parallel zur Kauebene gegen den Zahn gesehen. In dieser Fehlstellung liegt der Richtdraht 9 in dem Schlitz 4 des erfindungsgemäßen Bracket nicht flach auf dem Schlitzgrund 4a auf, sondern berührt den Schlitzgrund 4a nur an seinem mesialen oder distalen Ende, je nach Fehlstellung des Zahns. Dieser Auflagebereich ist in Fig. 5 mit P gekennzeichnet. Die Feder 7 drückt aufgrund der ihr innewohnenden Vorspannung auf den Richtdraht 9 an der Stelle Q in Richtung auf den Schlitzgrund 4a. Da die Feder 7 sich an der Unterseite des Flügels 6 abstützt und an dieser eine nach oben gerichtete Kraft ausübt, der Richtdraht aber nicht in die entgegengesetzte Richtung nachgeben kann, hat dieses zur Folge, daß auf den Zahn eine Kraft ausgeübt wird, die ihn um eine senkrecht zu Zahnachse und Schlitzerstrekkung verlaufende Achse in einer Richtung dreht, die in Fig. 5 mit "A" (für Angulationskraft) eingezeichnet ist. Der Zahn richtet sich allmählich auf, so daß der Winkel β, den der Richtdraht 9 mit dem Schlitzgrund 4a in Richtung der Längserstreckung des Schlitzes 4 einschließt, immer kleiner wird, bis der Richtdraht 9 am Ende der Behandlung im Idealzustand flach auf dem Schlitzgrund 4a aufliegt.

Man erkennt aus Fig. 6, daß der Schlitz relativ "flach" gehalten werden kann, d.h. weniger tief als breit sein kann, so daß ein Richtdraht 9 auch dann, wenn er den Schlitz 4 nicht in seiner ganzen Breite ausfüllt, d.h. ein Richtdraht 9 kleiner Querschnittsabmessungen der oben erläuterten Richtdraht-"Familie", über die Schlitzöffnung hinausragt und von der Schließfeder 7 (oder einer an deren Stelle über die Flügel 5 und 5 geschlungenen Ligatur) mit Kraft beaufschlagt wird. Die geringe Schlitztiefe erlaubt es, das Bracket sehr niedrig zu gestalten.

Bemerkenswert ist beim erfindungsgemäßen Bracket ferner, daß in lingualer Richtung nur abgerundete Teile, nämlich jeweils der bogenförmige Bereich der Schließfedern, exponiert sind, was die Belästigung des Patienten durch die Brakkets minimiert.

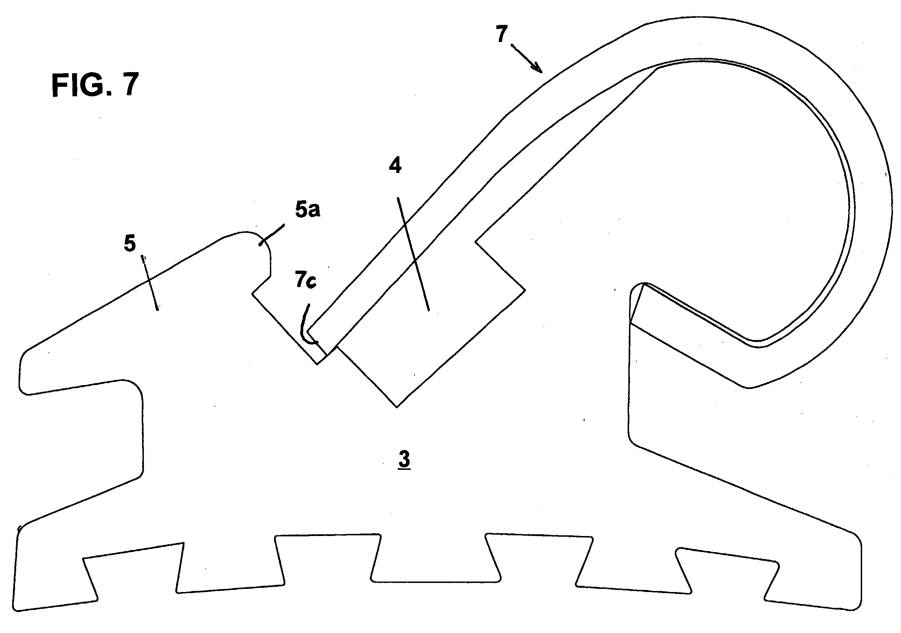

Fig. 7 zeigt eine zweite Ausführungsform eines erfindungsgemäßen Bracket, das sich von dem nach Fig. 1 dadurch unterscheidet, daß es an dem Flügel 5 einen nasenartigen Vorsprung 5a aufweist, der sich über das freie Ende 7c der Schließfeder 7 erstreckt. Er verhindert, daß die Feder 7 einem vom etwa Richtdraht ausgehenden Druck in Öffnungsrichtung sofort nachgibt. Er ist so dimensioniert, daß die Feder 7 nachgeben kann, wenn ein bestimmter Grenzwert erricht wird. Somit sind die Kräfte, die auf den Zahn wirken können limitiert, wodurch wiederum der Zahn vor Überbelastung geschützt wird. Die Kräfte sind ähnlich der, die der Kieferorthopäde beim Öffnen der Schließfeder 7 mit einem in eine Öffnung 10 (siehe Fig. 4) der Schließfeder 7 eingeführten Instrument, etwa ein Haken, auf die Schließfeder ausübt. Dieses Bracket ist beispielsweise an den Eckzähnen verwendbar, wo es auf extrem flache Bauform des Bracket nicht so sehr ankommt.

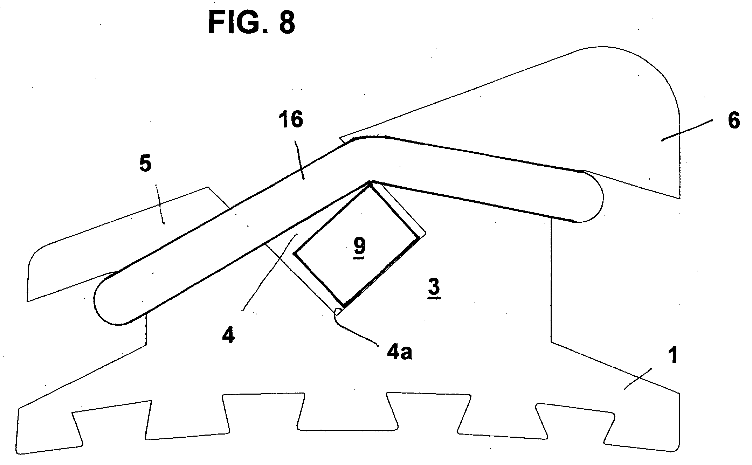

Schließlich zeigt Fig. 8 eine Seitenansicht eines erfindungsgemäßen Bracket, das keine Feder zum Sichern des Richtdrahtes in dem Schlitz 4 aufweist und daher ausschließlich für die Verwendung in Kombination mit einer elastischen Ligatur, beispielsweise in Form eines O-Rings 16 aus Gummi, bekannter Art zu verwenden ist, die über den Richtdraht 9 und die Flügel 5 und 6 geschlungen wird und den Richtdraht in dem Schlitz 4 festhält und ihn auf den Schlitzgrund 4a drückt. Auch wenn in diesem Ausführungsbeispiel die Tiefe des Schlitzes 4 größer ist als seine Breite, ist die Ausrichtung des Schlitzes 4 doch wie bei den vorangehend beschriebenen Ausführungsbeispielen, so daß ein Richtdraht 9 rechteckiger Querschnittsabmessungen, wie hier dargestellt, "flach", also mit seiner breiteren Seite, auf den Schlitzgrund 4a aufgelegt wird, um anschließend mit der Ligatur 16 in seiner Position gesichert zu werden.

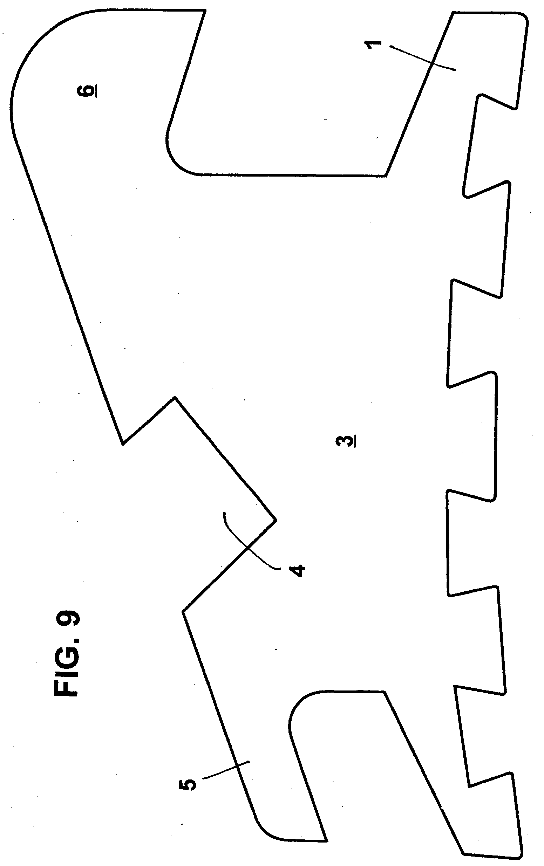

Gleiches gilt bezüglich Lage des Richtdrahtes im Schlitz 4 und Sicherung desselben darin bei der Ausführungsform nach Fig. 9, die ein Bracket zeigt, dessen Schlitz, wie bei der Ausführungsform nach Fig. 1, weniger tief als breit ist.

## Patentansprüche

1. Linguales Bracket für kieferorthopädische Behandlungen der Front- und Eckzähne, bestehend aus einer Grundplatte (1) zur klebenden Befestigung an der lingualen Seite eines Zahns mit einander entgegengesetzten okklusalen und gingivalen Rändern (O, G), einem sich von der Grundplatte (1) erhebenden Aufbau (3) mit im wesentlichen parallel zu der Grundplatte (1) erstreckenden Schlitz (4) zur Aufnahme eines Richtdrahts (9), und einer Einrichtung (7; 16) zur Sicherung eines Richtdrahtes (9) in diesem Schlitz (4), **dadurch gekennzeichnet, daß** der Schlitz (4) in dem Aufbau (3) derart ausgebildet ist, daß eine gedachte, durch den Schlitzgrund (4a) und die diesem gegenüberliegenden Schlitzöffnung verlaufende, sich längs des Schlitzes (4) erstreckende Schlitzebene (V) mit einer von der Grundplatte (1) bestimmten Ebene (B) einen spitzen Winkel (α) einschließt und die dem Scheitel des Winkels (α) abgewandte Schlitzöffnung im wesentlichen in die Richtung des okklusalen Randes (O) der Grundplatte (1) weist.

2. Bracket nach Anspruch 1, **dadurch gekennzeichnet, daß** der Schlitz (4) eine Tiefe hat, die geringer ist als seine Breite.

3. Linguales Bracket nach Anspruch 1 oder 2, **dadurch gekennzeichnet, daß** die Sicherungseinrichtung von einer Blatt- oder Drahtbügelfeder (7) gebildet ist, die an dem Aufbau (3) verankert ist und in einer Schließstellung den Schlitz (4) überdeckt.

4. Bracket nach Anspruch 3, **dadurch gekennzeichnet, daß** die Blatt- oder Drahtbügelfeder (7) einen Abschnitt (7a) aufweist, der einen Bogen von etwa 270° beschreibt, der an einem Flügel (6) des Aufbaus (3) elastisch klemmend anliegt und weiterhin eine etwa geradlinige Verlängerung (7b) aufweist, und daß die Blatt- oder Drahtbügelfeder (7) zwischen zwei Endstellungen verschwenkbar ist, in deren einer der Schlitz (4) offen und in deren anderer der Schlitz (4) von der geradlinigen Verlängerung (7b) überdeckt ist, wobei die Blattfeder (7) in beiden Endstellungen durch elastische Verspannung des bogenförmigen Abschnitts (7a) an dem Flügel (6) stabil gehalten ist.

5. Bracket nach Anspruch 4, **dadurch gekennzeichnet, daß** das freie Ende (7c) der Verlängerung (7b) der Blattfeder (7) in der den Schlitz (4) überdeckenden Stellung durch einen Vorsprung (5a) an dem Aufbau (3) abgedeckt ist.
